# FASCICULE DE BREVET EUROPEEN

(11) **EP 1 851 452 B1**
(45) Date de publication et mention de la délivrance du brevet: **24.08.2011**
(21) Numéro de dépôt: 06709527.3
(22) Date de dépôt: 20.02.2006
(51) Int. Cl.: F16C 27/06, F16C 33/10, F16C 33/12

(54) **ORGANE DE GUIDAGE**
FÜHRUNGSELEMENT
GUIDING ELEMENT

(30) Priorité: 21.02.2005 FR 0550473
(43) Date de publication de la demande: 07.11.2007
(73) Titulaire: H.E.F., 42160 Andrézieux-Bouthéon (FR)
(72) Inventeur: BARLERIN, Jean-claude, F-42170 Saint-Just-Saint-Rambert (FR); CHADUIRON, Eric, F-42140 Viricelles (FR)
(74) Mandataire: Thivillier, Patrick
(86) Numéro de dépôt international: PCT/FR2006/050148
(87) Numéro de publication internationale: WO 2006/087500

(56) Documents cités:
- EP-A- 1 288 512
- GB-A- 653 708
- US-A- 2 558 598
- US-A- 4 678 348
- US-A- 5 019 738
- US-A1- 2002 141 669

## Description

L'invention se rattache au secteur technique des organes de guidage. Un organe de guidage selon le préambule de la revendication 1 est connu du document US 2002/0141669A.

Une application avantageuse concerne les articulations susceptibles de travailler avec des désalignements importants, des chocs, et susceptibles d'être soumises à des effets vibratoires avec des mouvements de faible amplitude. Ce type d'articulations peut, par exemple, se trouver sur du matériel roulant : trains, camions, ...

Ces articulations sont généralement constituées par un organe de guidage sous forme d'un corps présentant un alésage (bague par exemple) pour le montage avec capacité d'oscillation et/ou de coulissement d'un axe. Le corps et/ou l'axe peu(ven)t être traité(s) ou agencé(s) pour éviter les phénomènes d'usure, de grippage et/ou de corrosion.

Le corps, par exemple sous forme de bague, est monté dans l'alésage d'un organe, d'une manière rigide. Compte tenu des mouvements de l'axe et du montage rigide de la bague, il n'est pas possible d'accepter des désalignements importants, des chocs, des effets vibratoires.

L'invention s'est fixée pour but de remédier à ces inconvénients d'une manière simple, sûre, efficace et rationnelle.

Le problème que se propose de résoudre l'invention est de conférer à la bague ou autre, un certain degré de liberté par rapport à son mode de fixation pour accepter des désalignements importants.

Pour résoudre un tel problème, et pour résoudre le problème posé d'éviter le grippage et/ou la corrosion, il a été conçu un organe de guidage selon la revendication 1.

Avantageusement, l'élément en matière souple déformable est inséré dans une bague externe en matériau rigide.

Différentes formes de réalisation peuvent être envisagées au niveau des agencements aptes à faire office de réserve de lubrifiant. Ces agencements peuvent être, par exemple, constitués par des trous, des alvéoles, des rainures formant un quadrillage ou des chevrons.

Avantageusement, ces agencements, aptes à faire office de réserves de lubrifiants, sont disposés au moins entre des gorges formées à chacune des extrémités de l'alésage de la bague.

Dans ce cas, lorsque les agencements sont constitués par des rainures, ces dernières sont en communication avec l'une des gorges au moins.

Selon une autre caractéristique, l'élément en matière souple déformable, est choisi parmi les élastomères. La solidarisation de l'élément en matière souple déformable avec la bague, s'effectue par un procédé d'adhérisation.

Toujours en ayant pour objectif de résoudre le problème posé du grippage et/ou de la corrosion, l'axe est soumis, au moins au niveau de sa surface de frottement avec la bague, à un traitement de durcissement superficiel par diffusion ou par transformation structurale suivi d'un traitement de finition et d'un traitement apte à réduire la tendance au grippage et à réduire le coefficient de frottement et/ou la sensibilité à la corrosion.

L'invention est exposée ci-après plus en détail à l'aide des figures des dessins annexés dans lesquels :

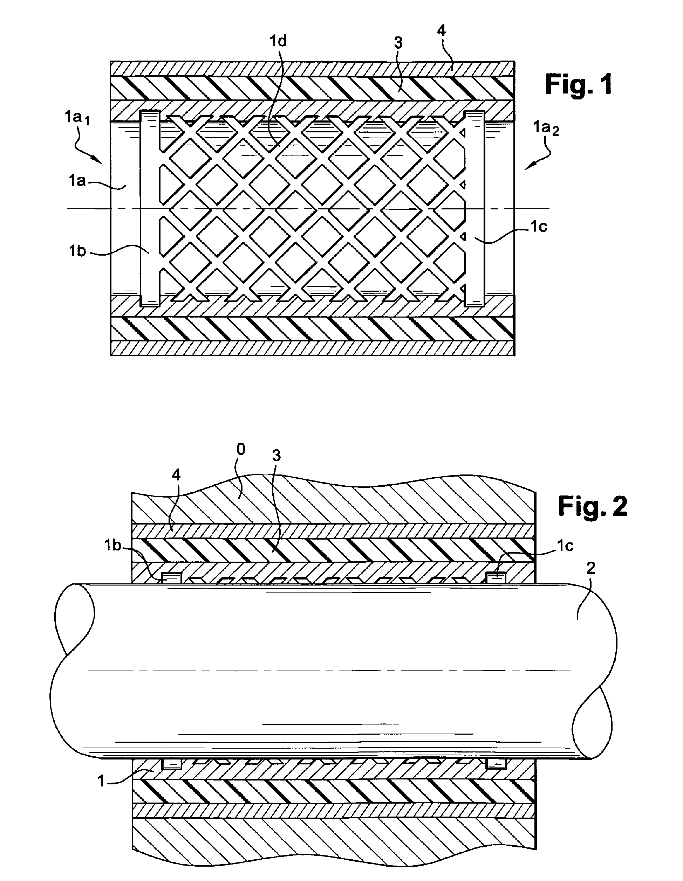

- la figure 1 est une vue en coupe longitudinale d'une forme de réalisation de l'organe de guidage ;
- la figure 2 est une vue en coupe longitudinale, semblable à la figure 1, montrant un exemple de montage de l'organe de guidage élastique ;
- les figures 3, 4, 5 et 6 montrent différentes formes de réalisation au niveau des gorges.

L'organe de guidage selon l'invention est composé d'une bague (1) en combinaison avec un élément déformable élastiquement (3). Par exemple, le dispositif est destiné à être monté dans l'alésage d'un support (O).

La bague (1) est soumise, au moins au niveau de sa surface de frottement avec l'axe, à un traitement de durcissement superficiel par diffusion ou par transformation structurale, suivi d'un traitement de finition et d'un traitement apte à réduire la tendance au grippage et à réduire le coefficient de frottement. Par exemple, le traitement de durcissement superficiel par diffusion est sélectionné parmi les nitrurations, nitrocarburations, carbonitrurations, cémentations, chromisations. Le traitement de durcissement superficiel par transformation structurale peut être une trempe superficielle à haute fréquence. Le traitement de finition est, par exemple, une réaction superficielle d'oxydation ou de phosphatation, suivie soit d'une imprégnation huile soluble ou entière, soit de l'apport en surface d'un revêtement apte à réduire la tendance au grippage et à réduire le coefficient de frottement et/ou la sensibilité à la corrosion.

Le revêtement ou traitement apte à réduire la tendance au grippage et à réduire le coefficient de frottement et/ou la sensibilité à la corrosion, peut consister en une couche de polymère contenant ou non un lubrifiant solide, notamment du graphite, du bisulfure de Molybdène ou du PTFE.

Selon l'invention, en combinaison avec ces différents traitements, l'alésage (1a) de la bague (1) présente des agencements aptes à faire office de réserve d'un lubrifiant tel que de la graisse.

Différentes solutions techniques peuvent être envisagées. Par exemple, ces agencements sont constitués par des trous ou alvéoles formées dans l'épaisseur de la bague au niveau de l'alésage (1a). Ou bien, ces agencements sont constitués par des rainures (1d) convenablement orientées pour former un quadrillage (figures des dessins) ou des chevrons jointifs ou non au niveau de leur sommet.

D'une manière avantageuse, ces agencements, quelle soit leur forme de réalisation, sont disposés, au moins, entre des gorges (1b) et (1c) formées à chacune des extrémités (1a1) et (1a2) de l'alésage (1a) de la bague (1).

Dans le cas de rainures (1d), ces dernières sont en communication avec l'une au moins des gorges (1b) ou (1c).

Les gorges (1b) et (1c) sont conformées pour éviter à la graisse ou autre lubrifiant de sortir de la surface de frottement.

A titre indicatif nullement limitatif, la profondeur des gorges (1b) et (1c) peut être comprise entre 0, 3 et 3 mm environ. Plus généralement, la profondeur des gorges (1b) et (1c) est, au plus, égale à sensiblement le tiers de l'épaisseur du corps (1).

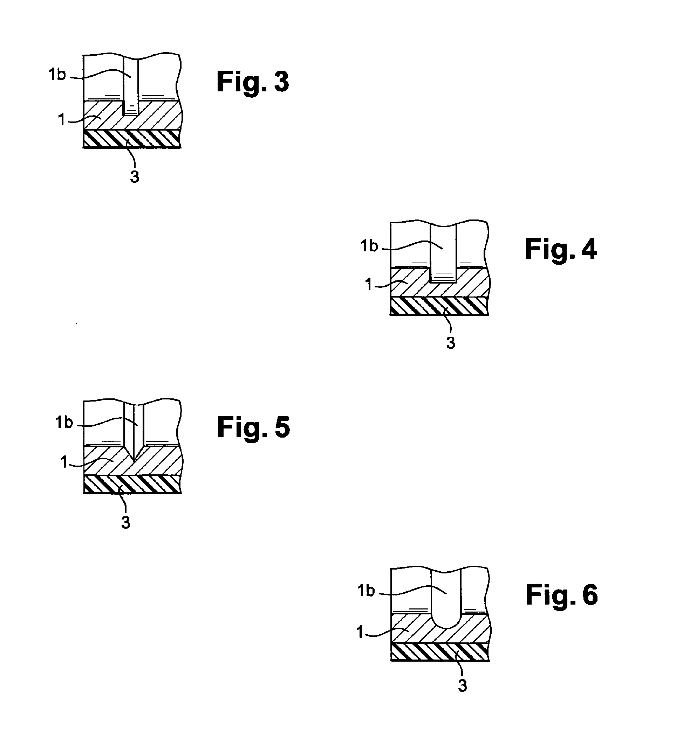

Le profil des gorges peut présenter différentes formes, notamment carrée (figure 3), rectangulaire (figure 4), triangulaire (figure 5), ronde (figure 6), en étant chanfreinée ou non.

Compte tenu du problème posé à résoudre d'éviter à la graisse de sortir de la surface de frottement, les gorges (1b) et (1c) sont positionnées à une distance, de chacune des extrémités (1a1) et (1a2) de l'alésage, comprise entre 1 et 6 mm environ. De même, la largeur des gorges (1b) et (1c) est comprise entre 0,5 et 5 mm environ.

Compte tenu de la combinaison des gorges (1b) et (1c) et des rainures (1d), il en résulte que lesdites gorges en communication avec lesdites rainures permettent d'éviter l'évacuation du lubrifiant contenu au niveau de la zone délimitée par lesdites rainures (1d), les gorges faisant également office de réserve de graisse pour réapprovisionner ces rainures.

La profondeur des gorges (1b) et (1c) est d'environ 1 à 10 fois supérieure à la profondeur des rainures (1d). Les rainures (1d) délimitent une zone (chevrons ou quadrillage, par exemple) représentant environ 30 à 70 % de la zone de frottement.

Selon une autre caractéristique importante de l'invention, la périphérie externe de la bague (1) est rendue solidaire de l'élément en matière souple déformable (3) apte à être engagé dans l'alésage de l'organe (O). Cet élément (3) est sélectionné parmi les élastomères. La solidarisation de l'élément (3) à la périphérie de la bague (1) s'effectue par un procédé d'adhérisation.

En fonction des applications envisagées, l'ensemble de la bague (1) et de l'élément en élastomère (3) peut être rendu solidaire d'une bague externe (4). Comme précédemment, la fixation de la bague externe (4) sur l'élément élastomère (3), s'effectue par un procédé d'adhérisation. A noter que les surfaces des deux bagues (1) et (4), sur lesquelles est fixé l'élément élastomère (3), peuvent subir préalablement une préparation, notamment par micro-billage ou micro-sablage.

Toujours en ayant pour objectif de résoudre le problème posé d'éviter les phénomènes de grippage ou de corrosion, l'axe (2) peut également être soumis à un traitement de durcissement superficiel par diffusion ou par transformation structurale suivi d'un traitement de finition et d'un traitement apte à réduire la tendance au grippage et à réduire le coefficient de frottement. Ce traitement de l'axe (2) peut, éventuellement, être combiné avec des agencements aptes à faire office de réserves de lubrifiants, du type de ceux décrits pour la bague (1).

Les avantages ressortent bien de la description.

## Revendications

1. Organe de guidage sous forme d'une bague (1) pour le montage avec frottement et capacité d'articulation et/ou de coulissement d'un axe (2), l'organe étant destiné à être monté dans l'alésage d'un support, la périphérie externe de la bague étant rendue solidaire d'un élément en matière souple déformable (3) apte à être engagé dans l'alésage du support, **caractérisé en ce que** :
- la bague est soumise, au moins au niveau de sa surface de frottement, à un traitement de durcissement superficiel par diffusion , suivi d'un traitement de finition aptes à réduire la tendance au grippage et à réduire le coefficient de frottement ;
- la surface de frottement de la bague (1), constituée par son alésage (1a), présente des agencements aptes à faire office de réserve **de graisse.**

2. Organe selon la revendication 1, **caractérisé en ce que** l'élément en matière souple déformable (3) est inséré dans une bague externe (4) en matériau rigide.

3. Organe selon la revendication 2, **caractérisé en ce que** les agencements aptes à faire office de réserve de **graisse** sont constitués par des trous ou alvéoles.

4. Organe selon la revendication 2, **caractérisé en ce que** les agencements aptes à faire office de réserve de **graisse** sont constitués par des rainures (1d).

5. Organe selon la revendication 4, **caractérisé en ce que** les rainures (1d) forment un quadrillage.

6. Organe selon la revendication 4, **caractérisé en ce que** les rainures (1d) forment des chevrons.

7. Organe selon l'une quelconque des revendications 1 à 6, **caractérisé en ce que** les agencements aptes à faire office de réserve de **graisse** sont disposés au moins entre des gorges (1b) et (1c) formées à chacune des extrémités de l'alésage (1a) de la bague (1).

8. Organe selon la revendication 7, **caractérisé en ce que** les agencements sont constitués par des rainures (1d) en communication avec les gorges (1b) et (1c).

9. Organe selon la revendication 1, **caractérisé en ce que** l'élément (3) en matière souple déformable, est choisi parmi les élastomères.

10. Organe selon la revendication 1, **caractérisé en ce que** la solidarisation de l'élément en matière souple déformable (3), s'effectue par un procédé d'adhérisation.

## Claims

1. Guiding member in the form of a ring (1) used to mount a shaft (2) with friction and with articulation and/or sliding capability, wherein the element is intended to be mounted in the bore in a support, the external periphery of the ring being rigidly connected to an element made of a flexible deformable material (3) capable of being engaged in the bore in the support, **characterised in that**:
- the ring is subjected, at least at the friction surface thereof, to a surface hardening treatment by diffusion, followed by a finishing treatment capable of reducing seizing tendency and reducing the coefficient of friction;
- the friction surface of the ring (1), formed by the bore (1a) therein, comprises means that can be used to store a grease;

2. Member as claimed in claim 1, **characterised in that** the flexible deformable element (3) is inserted into an external ring (4) made of rigid material.

3. Member as claimed in claim 2, **characterised in that** the means that can be used to store a grease are formed by holes or cells.

4. Member as claimed in claim 2, **characterised in that** the means that can be used to store a grease are formed by slots (1d).

5. Member as claimed in claim 4, **characterised in that** the slots (1d) form a grating.

6. Member as claimed in claim 4, **characterised in that** the slots (1d) form chevrons.

7. Member as claimed in any one of claims 1 to 6, **characterised in that** the means that can be used to store a grease are placed at least between grooves (1b) and (1c) formed at each of the ends of the bore (1a) in the ring (1).

8. Member as claimed in claim 7, **characterised in that** the means are formed by slots (1d) in communication with the grooves (1b) and (1c).

9. Member as claimed in claim 1, **characterised in that** the flexible deformable element (3) is selected from among the elastomers.

10. Member as claimed in claim 1, **characterised in that** the flexible deformable element (3) is rigidly connected using a bonding method.

## Patentansprüche

1. Führungsorgan in Form eines Rings (1) für die Montage mit Reibung und Gelenkfähigkeit und/oder Gleitfähigkeit einer Achse (2), wobei das Organ für den Einbau in die Bohrung einer Halterung bestimmt ist, wobei der äußere Rand des Rings mit einem weichen verformbaren Material (3) fest verbunden wird, das geeignet ist, in die Bohrung der Halterung eingeführt zu werden,
**dadurch gekennzeichnet, dass**:
- der Ring mindestens im Bereich seiner Reibungsfläche einer oberflächlichen Diffusionshärtung gefolgt von einer Finish-Behandlung unterzogen wird, um die Neigung zum Festfressen und den Reibungskoeffizienten zu vermindern;
- die aus der Bohrung (1a) bestehende Reibungsfläche des Rings (1) Vorkehrungen aufweist, die geeignet sind, als Fettreserve zu dienen;

2. Organ nach Anspruch 1, **dadurch gekennzeichnet, dass** das Element aus weichem verformbaren Material (3) in einem äußeren Ring (4) aus starrem Material eingefügt ist.

3. Organ nach Anspruch 2, **dadurch gekennzeichnet, dass** die als Fettreserven dienenden Vorkehrungen aus Löchern bzw. Mulden bestehen.

4. Organ nach Anspruch 2, **dadurch gekennzeichnet, dass** die als Fettreserven dienenden Vorkehrungen aus Rillen (1d) bestehen.

5. Organ nach Anspruch 4, **dadurch gekennzeichnet, dass** die Rillen (1d) ein Netzmuster bilden.

6. Organ nach Anspruch 4, **dadurch gekennzeichnet, dass** die Rillen (1d) ein Fischgrätenmuster bilden.

7. Organ nach einem der vorhergehenden Ansprüche, **dadurch gekennzeichnet, dass** die als Fettreserven dienenden Vorkehrungen mindestens zwischen Auskehlungen (1b und 1c) an jedem Ende der Bohrung (1a) des Rings (1) angeordnet sind.

8. Organ nach Anspruch 7, **dadurch gekennzeichnet, dass** die Vorkehrungen (1d) aus Rillen (1d) bestehen, die mit den Auskehlungen (16 und 1c) in Verbindung stehen.

9. Organ nach Anspruch 1, **dadurch gekennzeichnet, dass** das aus weichem verformbarem Material bestehende Element (3) aus den Elastomeren ausgewählt wird.

10. Organ nach Anspruch 1, **dadurch gekennzeichnet, dass** die feste Verbindung des Elements aus weichem verformbarem Material (3) durch ein Klebeverfahren erfolgt.
